# EUROPÄISCHE PATENTANMELDUNG

(11) **EP 3 095 361 A1**
(43) Veröffentlichungstag der Anmeldung: **23.11.2016**
(21) Anmeldenummer: 16167725.7
(22) Anmeldetag: 29.04.2016
(51) Int. Cl.: A47J 31/44, A47L 15/44, D06F 39/02

(54) **VORRICHTUNG ZUM BETREIBEN EINES WASCHAUTOMATEN ODER KAFFEEBEREITERS, KAPSEL FÜR EINEN WASCHAUTOMATEN ODER KAFFEEBEREITER, WASCHAUTOMAT ODER KAFFEEBEREITER UND VERFAHREN ZUM BETREIBEN EINES WASCHAUTOMATEN ODER KAFFEEBEREITERS**

(30) Priorität: 18.05.2015 DE 102015107695
(71) Anmelder: Miele & Cie. KG, 33332 Gütersloh (DE)
(72) Erfinder: Beier, Dominic, 33332 Gütersloh (DE)

(57) **Zusammenfassung**

Vorrichtung zum Betreiben eines Waschautomaten oder Kaffeebereiters mit einem Kapselfach (102) zum Aufnehmen einer Kapsel (104) mit einer in dem Waschautomaten bzw. in dem Kaffeebereiter zu verwendenden Substanz, wobei die Kapsel (104) eine Codierung aufweist. Die Vorrichtung umfasst eine optische Sensoreinrichtung (108) zum Erfassen eines von der Codierung der in das Kapselfach (102) eingelegten Kapsel (104) reflektierten Lichts (202) und Bereitstellen einer auf dem reflektierten Licht (202) basierenden, die Codierung repräsentierenden, Codierungsinformation und eine Auswahleinrichtung zum Auswählen einer der Codierungsinformation zugeordneten Geräteeinstellung des Waschautomaten oder Kaffeebereiters aus einer Mehrzahl von Geräteeinstellungen.

## Beschreibung

Die Erfindung betrifft eine Vorrichtung zum Betreiben eines Haushaltsgeräts, eine Kapsel für ein Haushaltsgerät, ein Haushaltsgerät sowie ein Verfahren zum Betreiben eines Haushaltsgeräts.

Waschautomaten sind immer häufiger mit einer Funktionalität ausgestattet, die für spezielle Anwendungen für die Wäsche die Verwendung sogenannter Portionskapseln erlaubt, die in den Einspülkasten eingesetzt und zum optimalen Zeitpunkt in den Waschprozess dosiert werden.

Je nach verwendetem Pflegeprodukt, das in einer Kapsel enthalten ist, wählt beispielsweise der Kunde über ein Display und Tasten der Gerätesteuerung nach Einsetzen der Kapsel in den Einspülkasten die Kapseldosierung an und nimmt über ein Auswahlmenü dem Pflegeprodukt entsprechende Geräteeinstellungen vor.

Der Erfindung liegt die Aufgabe zugrunde, eine verbesserte Vorrichtung zum Betreiben eines Haushaltsgeräts, eine verbesserte Kapsel für ein Haushaltsgerät, ein verbessertes Haushaltsgerät sowie ein verbessertes Verfahren zum Betreiben eines Haushaltsgeräts zu schaffen.

Erfindungsgemäß wird diese Aufgabe durch eine Vorrichtung zum Betreiben eines Haushaltsgeräts, weiterhin eine Kapsel für ein Haushaltsgerät, ein Haushaltsgerät sowie ein Verfahren zum Betreiben eines Haushaltsgeräts mit den Merkmalen der Hauptansprüche gelöst. Vorteilhafte Ausgestaltungen und Weiterbildungen der Erfindung ergeben sich aus den nachfolgenden Unteransprüchen.

Eine optische Identifizierung einer in das Kapselfach eingelegten Kapsel ermöglicht eine auf der optischen Identifizierung basierende automatische Einstellung entsprechender Programme des Haushaltsgeräts.

Gemäß dem hier vorgeschlagenen Konzept kann eine kostengünstige Vorrichtung sowie ein kostengünstiges und robustes Verfahren zur berührungslosen Identifizierung von Kapseln und automatischen Vornahme der entsprechenden Geräteeinstellungen seitens der Gerätesteuerung des Haushaltsgeräts realisiert werden. So kann die Gerätebedienung vorteilhaft vereinfacht und die Zahl von Fehlbedienungen verringert werden.

Im Vergleich beispielsweise zu einem RFID- oder NFC-System, bei dem zur Identifikation der Kapseln Hochfrequenzbauteile und Antennen eingesetzt werden müssen, können mit dem hier vorgestellten Ansatz Kosten eingespart werden. Darüber hinaus werden die zu identifizierenden Kapseln, bei denen es sich meist um Wegwerfprodukte handelt, nicht durch Mehrkosten, wie beispielsweise an die Kapseln anzubringende kostenintensive RFID- oder NFC-Tags, belastet. Darüber hinaus kann mit dem Verzicht auf derartige Tags die Menge von in der modernen Produktion anfallendem Elektroschrott - wenn auch nur geringfügig - verringert werden.

Eine Vorrichtung zum Betreiben eines Haushaltsgeräts mit einem Kapselfach zum Aufnehmen einer Kapsel mit einer in dem Haushaltsgerät zu verwendenden Substanz, wobei die Kapsel eine Codierung aufweist, weist die folgenden Merkmale auf:
eine optische Sensoreinrichtung zum Erfassen eines von der Codierung der in den Kapselfach eingelegten Kapsel reflektierten Lichts und Bereitstellen einer auf dem reflektierten Licht basierenden, die Codierung repräsentierenden, Codierungsinformation; und
eine Auswahleinrichtung zum Auswählen einer der Codierungsinformation zugeordneten Geräteeinstellung des Haushaltsgeräts aus einer Mehrzahl von Geräteeinstellungen.

Bei dem Haushaltsgerät kann es sich um einen Waschautomaten oder einen Kaffeebereiter handeln. Bei dem Kapselfach kann es sich um einen Hohlraum in einem Gehäuse des Haushaltsgeräts handeln, der geeignet ist, die Kapsel aufzunehmen. Das Kapselfach kann ausgebildet sein, um zum Einlegen der Kapsel geöffnet und wieder geschlossen zu werden. Die Kapsel kann beispielsweise mit einem Pulver oder einer Flüssigkeit als Substanz gefüllt sein und eine Deckfolie aufweisen, die automatisch geöffnet werden kann, wenn die Substanz im Gerät zum Einsatz kommen soll. Bei der Codierung kann es sich um eine bestimmte Gestaltung einer Außenseite der Kapsel handeln, beispielsweise einen Aufdruck oder eine bestimmte Farbgebung der Außenseite. Die optische Sensoreinrichtung kann ausgebildet sein, um das von der Codierung reflektierte Licht als eine Messgröße zu erfassen und die Codierungsinformation in Form eines elektrischen Signals bereitzustellen. Mit der zugeordneten Geräteeinstellung des Haushaltsgeräts kann die Substanz aus der Kapsel in dem Haushaltsgerät wirksam eingesetzt werden.

Gemäß einer Ausführungsform kann die Sensoreinrichtung mindestens eine Lichtquelle und mindestens einen lichtempfindlichen Sensor aufweisen. Die Lichtquelle kann ausgebildet sein, um Licht zum Beleuchten der Codierung abzustrahlen. Der lichtempfindliche Sensor kann ausgebildet sein, um das von der Codierung reflektierte Licht zu detektieren. Bei der Lichtquelle kann es sich beispielsweise um eine LED mit weißem oder farbigem Licht handeln. Diese Ausführungsform bietet den Vorteil einer Beleuchtung der Kapsel auch bei geschlossenem Kapselfach. Bei dem lichtempfindlichen Sensor kann es sich um eine Fotodiode oder einen Fototransistor handeln.

Die Lichtquelle kann ausgebildet sein, um Licht einer vorbestimmten Wellenlänge abzustrahlen. Alternativ oder zusätzlich kann der lichtempfindliche Sensor ausgebildet sein, um Licht einer vorbestimmten Wellenlänge zu detektieren. Bei der vorbestimmten Wellenlänge kann es sich um die gleiche oder eine andere Wellenlänge handeln. Diese Ausführung der Lichtquelle ermöglicht eine Detektion einer Farbcodierung der Kapsel.

Gemäß einer Ausführungsform der Vorrichtung kann die Sensoreinrichtung eine weitere Lichtquelle aufweisen. Die weitere Lichtquelle kann ausgebildet sein, um Licht einer weiteren vorbestimmten Wellenlänge abzustrahlen. Entsprechend kann der lichtempfindliche Sensor ausgebildet sein, um von der Codierung reflektiertes Licht der vorbestimmten Wellenlänge und von der Codierung reflektiertes Licht der weiteren vorbestimmten Wellenlänge zu detektieren. So kann eine Farbcodierung der Kapsel fehlerfrei detektiert werden.

Gemäß einer Ausführungsform kann der lichtempfindliche Sensor ausgebildet sein, um Licht einer vorbestimmten Wellenlänge zu detektieren. Ferner kann die Sensoreinrichtung einen weiteren lichtempfindlichen Sensor aufweisen, der ausgebildet sein kann, um von der Codierung reflektiertes Licht einer weiteren vorbestimmten Wellenlänge zu detektieren. Dabei kann die Sensoreinrichtung ausgebildet sein, um die Codierungsinformation unter Verwendung des reflektierten Lichts der vorbestimmten Wellenlänge und des reflektierten Lichts der weiteren vorbestimmten Wellenlänge bereitzustellen. Auch auf diese Weise kann eine Farbcodierung der Kapsel fehlerfrei detektiert werden, wobei ein Einsatz einer einzigen Lichtquelle ausreichend ist und somit Herstellungskosten und Wartungsaufwand der Vorrichtung vorteilhaft reduziert werden können.

Gemäß einer weiteren Ausführungsform kann der lichtempfindliche Sensor ausgebildet sein, um von einer Reflexionszone der Codierung reflektiertes Licht zu detektieren. Die Sensoreinrichtung kann ferner einen weiteren lichtempfindlichen Sensor aufweisen, der ausgebildet ist, um von einer weiteren Reflexionszone der Codierung reflektiertes Licht zu detektieren. Dabei kann die Sensoreinrichtung ausgebildet sein, um die Codierungsinformation unter Verwendung des von der Reflexionszone der Codierung reflektierten Lichts und des von der weiteren Reflexionszone der Codierung reflektierten Lichts bereitzustellen. Auf diese Weise kann die Codierungsinformation kostengünstig unter Einsatz eines einfachen Reflexionsmessprinzips gewonnen werden.

Gemäß einer besonderen Ausführungsform kann die optische Sensoreinrichtung ausgebildet sein, um von einer an einer Fläche des Kapselfachs angeordneten oder anordenbaren Kalibriercodierung reflektiertes Licht zu erfassen und eine auf dem von der Kalibriercodierung reflektierten Licht basierende, die weitere Kalibriercodierung repräsentierende, Kalibrierinformation bereitzustellen. Zusätzlich kann die Vorrichtung eine Kalibriereinrichtung zum Kalibrieren der optischen Sensoreinrichtung unter Verwendung der Kalibrierinformation aufweisen. Die Kalibriercodierung kann sich z. B. an einer Seitenwand, auf einem Trennsteg, einem Deckel oder einem Boden des Kapselfachs befinden oder dort angebracht werden. Mit dieser Ausführungsform kann die Sensoreinrichtung in regelmäßigen Abständen nachjustiert werden, ohne dafür aus dem Haushaltsgerät entnommen werden zu müssen. Fehlmessungen der Sensoreinrichtung können so wirksam verhindert werden.

Ferner kann die Vorrichtung eine Geräteeinstelleinrichtung zum Einstellen der ausgewählten Geräteeinstellung aufweisen. Gemäß dieser Ausführungsform kann die Geräteeinstellung automatisch erfolgen. Auf eine manuelle Eingabe an einem Tastenfeld des Haushaltsgeräts kann damit vorteilhafterweise verzichtet werden.

Gemäß einer weiteren Ausführungsform kann die Lichtquelle ausgebildet sein, um ansprechend auf ein ein Öffnen des Kapselfachs repräsentierendes Öffnungssignal das Kapselfach zu beleuchten. So kann ein Bediener des Haushaltsgeräts das Kapselfach gut einsehen, beispielsweise, um es zu reinigen.

Eine Kapsel für ein Haushaltsgerät ist mit einer in dem Haushaltsgerät zu verwendenden Substanz gefüllt und weist eine Codierung zum Zuordnen einer Geräteeinstellung des Haushaltsgeräts zu der Kapsel auf.

Bei der Kapsel kann es sich um einen kleinen Behälter handeln, der beispielsweise aus Kunststoff hergestellt ist. Die Kapsel kann eine Deckfolie aufweisen, mit deren Öffnung die Substanz aus der Kapsel dosiert werden kann. Bei der Codierung kann es sich um einen Farbcode oder eine Bedruckung an einer Außenseite der Kapsel handeln. Die Codierung kann beispielsweise auf der Deckfolie aufgebracht sein.

Beispielsweise kann die Codierung durch eine vorbestimmte Farbgebung zumindest einer Codierzone der Kapsel gebildet sein. Mit der Farbgebung kann die Kapsel ohne Weiteres klar erkennbar sowohl für die Sensoreinrichtung als auch für einen Bediener des Haushaltsgeräts gekennzeichnet werden.

Alternativ oder zusätzlich kann die Codierung durch eine vorbestimmte Ausprägung zumindest einer Codierzone der Kapsel als Licht reflektierende oder nicht Licht reflektierende Codierzone gebildet sein. Mit dieser Ausführungsform kann die Kapsel einfach und mit geringem Kostenaufwand mit der Codierung versehen werden.

Ein Haushaltsgerät, insbesondere ein Waschautomat oder ein Kaffeebereiter, weist die folgenden Merkmale auf:
ein Kapselfach zum Aufnehmen einer Kapsel mit einer in dem Haushaltsgerät zu verwendenden Substanz, wobei die Kapsel eine Codierung aufweist; und
eine Vorrichtung zum Betreiben des Haushaltsgeräts, wobei die Vorrichtung eine optische Sensoreinrichtung zum Erfassen eines von der Codierung der in das Kapselfach eingelegten Kapsel reflektierten Lichts und Bereitstellen einer auf dem reflektierten Licht basierenden, die Codierung repräsentierenden, Codierungsinformation und eine Auswahleinrichtung zum Auswählen einer der Codierungsinformation zugeordneten Geräteeinstellung des Haushaltsgeräts aus einer Mehrzahl von Geräteeinstellungen aufweist.

Gemäß einer Ausführungsform des Haushaltsgeräts kann das Kapselfach eine Durchgangsöffnung zum Durchlassen eines von einer Lichtquelle der Sensoreinrichtung zum Beleuchten der Codierung abgestrahlten Lichts und/oder des von der Codierung reflektierten Lichts aufweisen. So können eine Beleuchtung der Kapsel und die Messwertaufnahme von der Kapsel bei über dem Kapselfach angeordneter Sensoreinrichtung mit geringem Aufwand realisiert werden.

Das Haushaltsgerät kann gemäß einem weiteren Ausführungsbeispiel mit einer Umlenkeinrichtung zum Umlenken des von der Lichtquelle abgestrahlten Lichts auf die Codierung ausgestattet sein. So kann die Sensoreinrichtung an beliebiger geeigneter Position im Gehäuse des Haushaltsgeräts untergebracht werden.

Ein Verfahren zum Betreiben eines Haushaltsgeräts mit einem Kapselfach zum Aufnehmen einer Kapsel mit einer in dem Haushaltsgerät zu verwendenden Substanz, wobei die Kapsel eine Codierung aufweist, und wobei die Vorrichtung eine optische Sensoreinrichtung zum Erfassen eines von der Codierung der in das Kapselfach eingelegten Kapsel reflektierten Lichts und Bereitstellen einer auf dem reflektierten Licht basierenden, die Codierung repräsentierenden, Codierungsinformation; und eine Auswahleinrichtung zum Auswählen einer der Codierungsinformation zugeordneten Geräteeinstellung des Haushaltsgeräts aus einer Mehrzahl von Geräteeinstellungen die folgenden Merkmale aufweist, weist die folgenden Schritte auf:
Erfassen eines von der Codierung der in das Kapselfach eingelegten Kapsel reflektierten Lichts;
Bereitstellen einer auf dem reflektierten Licht basierenden, die Codierung repräsentierenden, Codierungsinformation; und
Auswählen einer der Codierungsinformation zugeordneten Geräteeinstellung des Haushaltsgeräts aus einer Mehrzahl von Geräteeinstellungen.

Auch durch die Ausführungsvariante der Erfindung in Form eines Verfahrens kann die der Erfindung zugrunde liegende Aufgabe schnell und effizient gelöst werden.

Ausführungsbeispiele der Erfindung sind in den Zeichnungen rein schematisch dargestellt und werden nachfolgend näher beschrieben. Es zeigt
- Figur 1: ein Haushaltsgerät mit einer Vorrichtung zum Betreiben des Haushaltsgeräts und einem Kapselfach, gemäß einem Ausführungsbeispiel der vorliegenden Erfindung;
- Figur 2: eine Vorrichtung zum Betreiben eines Haushaltsgeräts gemäß einem Ausführungsbeispiel der vorliegenden Erfindung;
- Figur 3: ein Kapselfach in Kombination mit einer Sensoreinrichtung einer Vorrichtung zum Betreiben eines Haushaltsgeräts, gemäß einem Ausführungsbeispiel der vorliegenden Erfindung;
- Figur 4: eine Sensoreinrichtung mit einem Farbsensor gemäß einem Ausführungsbeispiel der vorliegenden Erfindung;
- Figur 5: eine Sensoreinrichtung mit einem Farbsensor gemäß einem weiteren Ausführungsbeispiel der vorliegenden Erfindung;
- Figur 6: ein Ablaufdiagramm eines Verfahrens zum zum Betreiben eines Haushaltsgeräts gemäß einem Ausführungsbeispiel der vorliegenden Erfindung;
- Figur 7: eine Codierung gemäß einem Ausführungsbeispiel der vorliegenden Erfindung;
- Figur 8: eine Codierung gemäß einem weiteren Ausführungsbeispiel der vorliegenden Erfindung; und
- Figur 9: eine Codierung gemäß einem weiteren Ausführungsbeispiel der vorliegenden Erfindung.

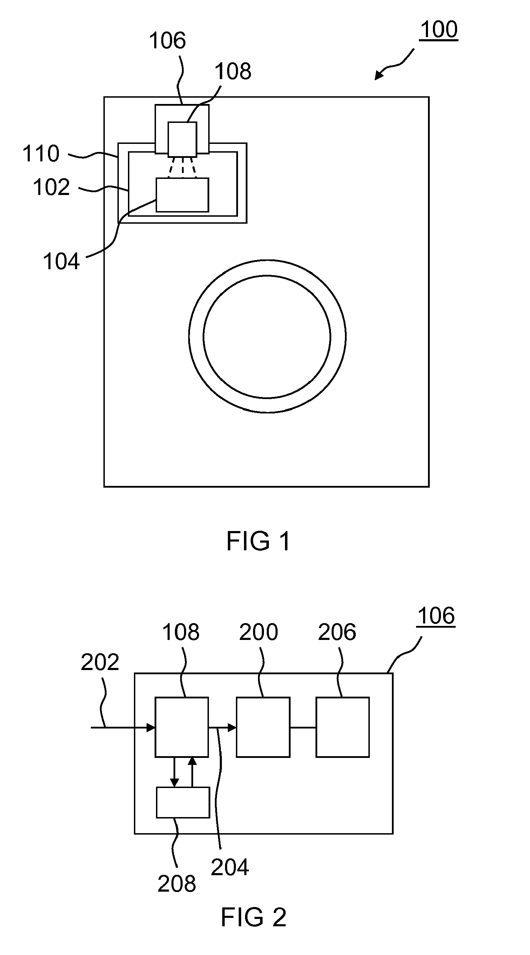

Figur 1 zeigt schematisch ein Haushaltsgerät 100 mit einem Kapselfach 102. Bei dem Haushaltsgerät 100 handelt es sich hier um einen Waschautomaten 100. Das Kapselfach 102 ist ausgebildet, um eine Kapsel 104, die mit einer in dem Haushaltsgerät 100 zu verwendenden Substanz gefüllt ist, aufzunehmen. Bei der Kapsel 104 handelt es sich um einen kleinen Behälter, der beispielsweise aus Kunststoff hergestellt ist und ausgebildet ist, um die Substanz bis zu deren Verwendung zu bevorraten. Die Kapsel 104 kann beispielsweise mit einer Deckfolie verschlossen sein, die zur Dosierung der Substanz automatisch geöffnet wird. Die Substanz kann beispielsweise in Pulverform oder flüssig vorliegen.

Das Haushaltsgerät 100 weist ferner eine Vorrichtung 106 zum Betreiben des Haushaltsgeräts 100 auf. Die Vorrichtung 106 weist eine optische Sensoreinrichtung 108 auf, die mit dem Kapselfach 102 optisch gekoppelt und ausgebildet ist, um für eine Identifizierung der in das Kapselfach 102 eingelegten Kapsel 104 eine Codierung der Kapsel 104 optisch zu erfassen. Nach erfolgter Identifizierung der Kapsel 104 ist die Vorrichtung 106 ausgebildet, um der Kapsel 104 bzw. dem Inhalt der Kapsel 104 entsprechende Geräteeinstellungen des Waschautomaten 100 automatisch vorzunehmen.

Bei dem in Fig. 1 gezeigten Waschautomaten 100 ist das Kapselfach 102 in einen Einspülkasten 110 des Waschautomaten 100 integriert und kann zusammen mit dem Einspülkasten 110 aus dem Korpus des Waschautomaten 100 herausgezogen werden. Dann kann ein Deckel des Kapselfachs 102 geöffnet werden, die Kapsel 104 in das Kapselfach 102 eingelegt werden, der Deckel geschlossen und der Einspülkasten 110 mit dem Kapselfach 102 wieder in den Korpus des Waschautomaten 100 zurückgeschoben werden. Basierend auf den von der Vorrichtung 106 vorgenommenen Geräteeinstellungen wird zu einem geeigneten Zeitpunkt während des Betriebs des Waschautomaten 100 die Kapsel 104 automatisch geöffnet und ihr Inhalt in die Waschtrommel dosiert.

Bei dem in Figur 1 gezeigten Ausführungsbeispiel der Kapsel 104 als für einen Waschautomaten 100 einsetzbar kann die Kapsel 104 beispielsweise einen Reinigungszusatz zur verbesserten oder schonenderen Reinigung bestimmter Textilien, die z. B. aus Wolle oder Seide bestehen, als die Substanz enthalten. Bei der Substanz in der Kapsel 104 kann es sich auch um einen speziellen Weichspüler handeln, der am Ende eines Waschprogramms zugegeben wird. Dann kann das Kapselfach 102 mit dem Weichspülerfach des Einspülkastens 110 verbunden oder bildet selbst das Weichspülerfach.

Die Vorrichtung 106 kann Teil eines zentralen Steuergeräts des Haushaltsgeräts 100 sein oder mit diesem über elektrische Leitungen elektrisch leitfähig gekoppelt sein.

Figur 2 zeigt eine Prinzipdarstellung eines Ausführungsbeispiels der Vorrichtung 106 zum Betreiben eines Haushaltsgeräts aus Figur 1. Die Vorrichtung 106 umfasst die optische Sensoreinrichtung 108 und eine Auswahleinrichtung 200. Die optische Sensoreinrichtung 108 ist ausgebildet, um von einer Codierung einer in das Kapselfach eines Haushaltsgeräts eingelegten Kapsel reflektiertes Licht 202 zu erfassen. Die Sensoreinrichtung 108 ist ferner ausgebildet, um eine auf dem reflektierten Licht 202 basierende, die Codierung der Kapsel repräsentierende, Codierungsinformation 204 an die Auswahleinrichtung 200 bereitzustellen. Die Auswahleinrichtung 200 ist ausgebildet, um eine der Codierungsinformation 204 zugeordnete Geräteeinstellung des die Vorrichtung 106 aufweisenden Haushaltsgeräts aus einer Mehrzahl von Geräteeinstellungen auszuwählen.

Bei dem in Figur 2 gezeigten Ausführungsbeispiel der Vorrichtung 106 verfügt diese optional ferner über eine Geräteeinstelleinrichtung 206. Die Geräteeinstelleinrichtung 206 ist ausgebildet, um die von der Auswahleinrichtung 200 ausgewählte Geräteeinstellung am Haushaltsgerät vorzunehmen.

Mit der Vorrichtung 106 wird mit dem Einlegen der Kapsel in das Kapselfach des Haushaltsgeräts durch einen Bediener des Haushaltsgeräts ein automatischer Prozess in Gang gesetzt, der eine Identifizierung der Kapsel mittels der optischen Sensoreinrichtung 108 und basierend auf der Identifizierung automatische Einstellungen am Haushaltsgerät vornimmt, die einen Programmablauf des Haushaltsgeräts so festlegen, dass die in der Kapsel enthaltene Substanz geeignet genutzt werden kann. Es sind damit keinerlei manuelle Eingaben des Bedieners des Haushaltsgeräts an einem Tastenfeld oder Ähnlichem des Haushaltsgeräts erforderlich.

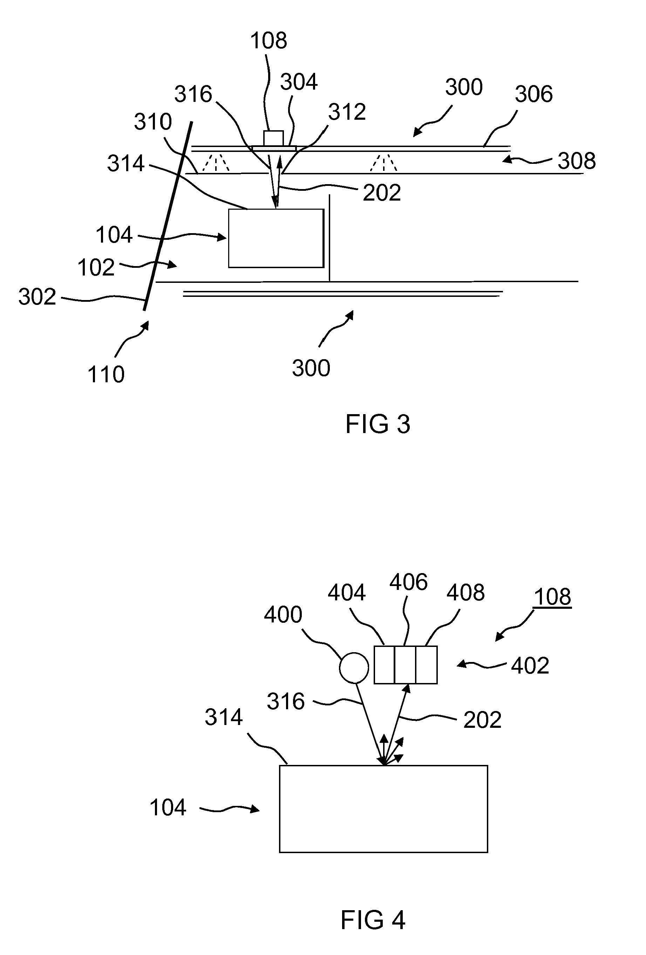

Gemäß einem Ausführungsbeispiel weist die Vorrichtung 106 eine optionale Kalibriereinrichtung 208 auf, wie sie nachfolgend anhand von Figur 3 näher beschrieben ist.

Figur 3 zeigt ein Schnittbild einer Seitenansicht eines beispielhaften Einspülkastens 110 eines Waschautomaten mit einem Kapselfach 102. Gezeigt ist ferner ein Ausführungsbeispiel des Sensorsystems bzw. der Sensoreinrichtung 108 der hierin vorgestellten Vorrichtung zum Betreiben eines Haushaltsgeräts.

Das Kapselfach 102 ist hier in den Einspülkasten 110 integriert und als ein im Einspülkasten 110 vorgesehener separater Hohlraum ausgeführt, der geeignet ist, die Kapsel 104 mit der Substanz aufzunehmen. Der Einspülkasten 110 mit dem Kapselfach 102 ist in einem Behälter 300 des Waschautomaten für den Einspülkasten 110 aufgenommen. Der Einspülkasten 110 weist eine Frontplatte 302 auf, an der der Einspülkasten 110 mit der Hand ergriffen und aus dem Behälter 300 herausgezogen werden kann, um den Einspülkasten 110 und/oder das Kapselfach 102 zu befüllen und wieder in den Behälter 300 zurückzuschieben, bis die Frontplatte 302 bündig mit einer Außenseite des Korpus des Waschautomaten abschließt.

Die optische Sensoreinrichtung 108 der Vorrichtung zum Betreiben des Waschautomaten ist an einem transparenten Fenster 304 einer oberen Wand 306 des Behälters 300 für den Einspülkasten 110 dem Kapselfach 102 gegenüberliegend angeordnet. Die in Figur 3 gezeigte beispielhafte optische Sensoreinrichtung 108 umfasst eine - in Figur 3 nicht gezeigte - Lichtquelle und einen - in Figur 3 ebenfalls nicht gezeigten - lichtempfindlichen Sensor. Als die Lichtquelle findet gemäß Ausführungsbeispielen eine LED mit weißem oder farbigem Licht Verwendung. Als der lichtempfindliche Sensor kommt gemäß Ausführungsbeispielen eine Fotodiode oder ein Fototransistor zum Einsatz. In Figur 3 ist der Einspülkasten 110 in den Behälter eingeschoben dargestellt. Zwischen einer Oberkante des Einspülkastens 110 und der das transparente Fenster 304 aufweisenden Wand 306 des Behälters 300 befindet sich ein Luftraum 308.

Das Kapselfach 102 weist einen Deckel 310 auf, der zum Einlegen der Kapsel 104 aufgeklappt und nach dem Einlegen wieder heruntergeklappt werden kann. In Figur 3 ist das Kapselfach 102 mit eingelegter Kapsel 104 gezeigt. Für die optische Identifikation der Codierung der Kapsel 104 mittels der Sensoreinrichtung 108 weist der Deckel 310 des Kapselfachs 102 eine Durchgangsöffnung 312 auf, die der Sensoreinrichtung 108 die optische Erfassung der in das Kapselfach 102 eingelegten Kapsel 104 ermöglicht. Das transparente Fenster 304 in der Wand 306 des Behälters 300 ist der Durchgangsöffnung 312 gegenüberliegend positioniert. Die optische Sensoreinrichtung 108 ist an dem transparenten Fenster 304 positioniert. Diese Anordnung ermöglicht den optischen Elementen der Sensoreinrichtung 108, der Lichtquelle und dem lichtempfindlichen Sensor, optischen Zugang zu der in das Kapselfach 102 eingelegten Kapsel 104.

Die Kapsel 104 ist bei dem in Figur 3 gezeigten Ausführungsbeispiel so in das Kapselfach 102 eingelegt, dass eine Deckfolie 314 der Kapsel 104 nach oben bzw. in Richtung der optischen Sensoreinrichtung 108 weist. Bei der beispielhaften Kapsel 104 weist die Deckfolie 314 die Codierung zur Identifikation der Kapsel 104 durch die Sensoreinrichtung 108 auf. Bei der Codierung kann es sich beispielsweise um eine Bedruckung oder eine Farbgebung der Deckfolie 314 handeln. Auf Varianten der Codierung der Kapsel 104 wird in nachfolgenden Figuren noch detaillierter eingegangen.

Die Lichtquelle der optischen Sensoreinrichtung 108 ist ausgebildet, um Licht 316 zum Beleuchten der Codierung auf die Kapsel 104 abzustrahlen. Der lichtempfindliche Sensor der optischen Sensoreinrichtung 108 ist ausgebildet, um das von der Codierung reflektierte Licht 202 zu detektieren und die auf dem reflektierten Licht 202 basierende Codierungsinformation zu erzeugen.

Bei dem Einsatz einer LED als die Lichtquelle der optischen Sensoreinrichtung 108 wird die Lichtquelle gemäß einem Ausführungsbeispiel der hier vorgestellten Vorrichtung zum Betreiben eines Haushaltsgeräts zusätzlich zur Beleuchtung der zu identifizierenden Kapsel 104 auch generell als Beleuchtung des Einspülkastens 110 genutzt. Dadurch ergibt sich ein zusätzlicher Kundennutzen. Gemäß einem Ausführungsbeispiel ist die Lichtquelle ausgebildet, um den Einspülkasten 110 und/oder das Kapselfach 102 ansprechend auf ein ein Öffnen des Einspülkastens 110 bzw. des Kapselfachs 102 repräsentierendes Öffnungssignal zu beleuchten.

Gemäß einem in den Figuren nicht gezeigten weiteren Ausführungsbeispiel der Vorrichtung zum Betreiben eines Haushaltsgeräts befindet sich die Lichtquelle der optischen Sensoreinrichtung 108 an anderer Stelle als der Codierung der Kapsel 104 gegenüberliegend, beispielsweise seitlich versetzt gegenüber der Kapsel 104. Dies kann bauraumtechnisch begründet sein. Die Vorrichtung ist dann mit einer Umlenkeinrichtung zum Umlenken des von der Lichtquelle abgestrahlten Lichts 316 auf die Codierung ausgestattet.

Gemäß einem Ausführungsbeispiel ist die Vorrichtung zum Betreiben eines Haushaltsgeräts mit einer optionalen Kalibriereinrichtung zum Kalibrieren der optischen Sensoreinrichtung 108 ausgestattet. Entsprechend ist an einer Fläche des Einspülkastens 110, insbesondere einer Fläche des Kapselfachs 102, eine Kalibriercodierung vorgesehen. Bei der Fläche kann es sich um eine Seitenwandoder einen Boden des Kapselfachs 102 handeln. Die optische Sensoreinrichtung 108 ist dann entsprechend ausgebildet, um die Kalibriercodierung zu beleuchten, von der Kalibriercodierung reflektiertes Licht zu erfassen und eine auf dem von der Kalibriercodierung reflektierten Licht basierende und die Kalibriercodierung repräsentierende Kalibrierinformation an die Kalibriereinrichtung bereitzustellen. Diese kalibriert dann die optische Sensoreinrichtung 108 unter Verwendung der Kalibrierinformation.

Mit dieser Ausführung der Vorrichtung kann beispielsweise neben den Farben der Deckfolie 314 der Kapsel 104 auch die Farbe spezieller Bereiche des Einspülkastens 110 beim Öffnen oder Schließen erkannt und als Möglichkeit zur Nachkalibrierung des Sensors genutzt werden.

Bei dem in Figur 3 gezeigten Ausführungsbeispiel der hierin vorgestellten Vorrichtung zum Betreiben eines Haushaltsgeräts wird die ins Haushaltsgerät eingelegte Kapsel 104 über die optischen Sensoren an geeigneter Position im Einspülkasten 110 identifiziert. Vorzugsweise ist das Sensorsystem 108 so platziert, dass eine Identifikation der Kapsel 104 von oben möglich ist. In das Kapselfach 102 eingelegte Kapseln 104 mit Pflegemitteln werden identifiziert und die entsprechenden Programme automatisch eingestellt. Durch die entsprechende Gestaltung der Bedruckung der Deckfolie 314 der Kapsel 104 ist eine einfache Unterscheidung der Kapseln 104 möglich. Das System arbeitet berührungslos und kann zusätzlich zur Beleuchtung des Einspülkastens 110 verwendet werden.

Mit dem hier vorgestellten Konzept wird ein zum Stand der Technik alternatives System zur Erkennung von Waschmittelkapseln 104 beschrieben, das ohne nennenswerte Modifikation der herkömmlichen Kapseln 104 auskommt und somit zu keiner Verteuerung der Kapseln 104 führt.

Statt einer direkten Sicht der Sensoreinrichtung 108 auf die Kapsel 104 durch das transparente Fenster 304 ist auch ein geeignetes Lichtleitersystem denkbar, um im Falle ungünstiger Bauraumverhältnisse das gegebenenfalls weiter entfernt montierte Sensorsystem 108 mit dem Messort zu verbinden.

Figur 4 zeigt schematisch ein Ausführungsbeispiel der Sensoreinrichtung 108 der hierin vorgestellten Vorrichtung zum Betreiben eines Haushaltsgeräts. Bei dem in Figur 4 gezeigten Ausführungsbeispiel ist die Sensoreinrichtung 108 auf eine Farberkennung ausgelegt. Entsprechend dieser Auslegung der Sensoreinrichtung 108 handelt es sich bei der Codierung der Kapsel 104 um eine Farbcodierung. Konkret ist die Deckfolie 314 der Kapsel 104 farbig gestaltet, beispielsweise durchgehend in einer bestimmten Farbe oder in Form verschiedener Farbflächen mit unterschiedlicher Farbgebung. Die Farbe der Deckfolie 314 wird von der Sensoreinrichtung 108 erfasst und in der die Sensoreinrichtung 108 aufweisenden Vorrichtung zum Betreiben eines Haushaltsgeräts zur Identifikation der in der Kapsel 104 enthaltenen Substanz verwendet.

Die von der Sensoreinrichtung 108 zu identifizierende Kapsel 104 ist in Figur 4 schematisch in einer Seitenansicht dargestellt und mit der Deckfolie 314 zu der Sensoreinrichtung 408 ausgerichtet positioniert.

Die beispielhafte Sensoreinrichtung 108 umfasst eine Lichtquelle 400 und ein Farbsensorelement 402 - hier konkret ein RGB-Sensorelement 402 -, die nebeneinander in einem Gehäuse der optischen Sensoreinrichtung 108 angeordnet sind. Als die Lichtquelle 400 der beispielhaften Sensoreinrichtung 108 in Figur 4 wird eine LED eingesetzt. Für die Farberkennung weist das RGB-Sensorelement 402 einen ersten lichtempfindlichen Sensor 404, einen zweiten lichtempfindlichen Sensor 406 und einen dritten lichtempfindlichen Sensor 408 auf. Bei den lichtempfindlichen Sensoren 404, 406, 408 handelt es sich hier um Fotodioden, die mit je einem roten, einem grünen und einem blauen Farbfilter versehen sind. Entsprechend ist jede Fotodiode 404, 406, 408 ausgebildet, um Licht unterschiedlicher Wellenlänge zu detektieren.

Bei dem in Figur 4 gezeigten Ausführungsbeispiel der optischen Sensoreinrichtung 108 ist die Lichtquelle 400 ausgebildet, um die Deckfolie 314 der Kapsel 104 mit weißem Licht 316 zu bestrahlen. Das RGB-Sensorelement 402 ist ausgebildet, um das von der Deckfolie 314 der Kapsel 104 reflektierte Licht 202 zu erfassen und unter Verwendung des reflektierten Lichts 202 einer oder mehrerer Wellenlängen die entsprechende Codierungsinformation bereitzustellen.

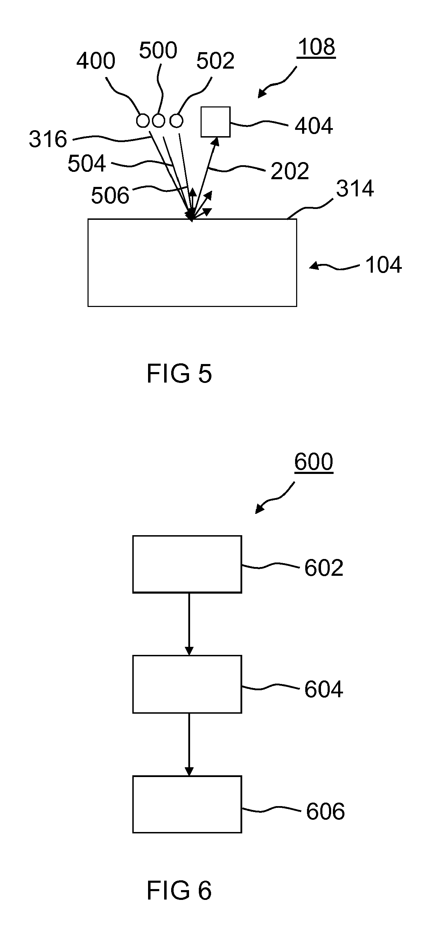

Figur 5 zeigt schematisch eine alternative Ausführung der Sensoreinrichtung 108 für die Farberkennung. Hier basiert die Farberkennung auf einer sequenziellen Bestrahlung der Deckfolie 314 der Kapsel 140 mit unterschiedlich farbigem Licht. Entsprechend weist die optische Sensoreinrichtung 108 hier neben der Lichtquelle 400 eine zweite Lichtquelle 500 und eine dritte Lichtquelle 502 auf. Wie in Figur 4 ist auch hier die Kapsel 104 zur Farbidentifikation ausgelegt, das heißt, ist in einer oder mehreren Farben gestaltet.

Die Lichtquelle 400 ist ausgebildet, um Licht einer ersten Wellenlänge 316 auf die Deckfolie 314 abzustrahlen, die zweite Lichtquelle 500 ist ausgebildet, um Licht einer zweiten Wellenlänge 504 auf die Deckfolie 314 abzustrahlen, und die dritte Lichtquelle 502 ist ausgebildet, um Licht einer dritten Wellenlänge 506 auf die Deckfolie 314 abzustrahlen.

Mit der Verwendung der Mehrzahl von Lichtquellen 400, 500, 502 ist damit lediglich ein lichtempfindlicher Sensor 404 zur Detektion des in Abhängigkeit von der verwendeten Farbe der Deckfolie 314 reflektierten Lichts 202 erforderlich. Der lichtempfindliche Sensor 404 ist hier gemäß Ausführungsbeispielen als Fotodiode oder Fototransistor ausgeführt und weist keinen Filter auf.

Bei den in den Figuren 4 und 5 gezeigten beispielhaften Umsetzungen der Sensoreinrichtung 108 wird die Kapsel 104 anhand der Farbe der Deckfolie 314 mithilfe eines geeigneten Sensors identifiziert. Dabei kann der Sensor beispielsweise als Kombination von Fotodioden bzw. -transistoren 404, 406, 408 mit entsprechenden Farbfiltern und einer Lichtquelle 400 realisiert sein. Es können so Wellenlängenbereiche bzw. deren Verhältnisse des von der Deckfolie 314 reflektierten Lichts 202 einer geeigneten Lichtquelle 400, 500, 502 erfasst und zur Unterscheidung der Kapseln 104 genutzt werden.

Bei einer in den Figuren nicht gezeigten Variante zur Identifikation der Kapseln 104 arbeitet die Sensoreinrichtung 108 nach dem Reflexionsmessprinzip, wobei auf eine Farberkennung der Kapsel 104 verzichtet werden kann. Hier wird die Kapsel 104 mit entsprechenden Reflexionszonen ausgestattet. Eine beispielhafte Kapselgestaltung mit Reflexionszonen ist in den nachfolgenden Figuren gezeigt. Durch unterschiedliche Gestaltung der Reflexionszonen mit z. B. sehr hohem bzw. sehr niedrigem Reflexionsgrad und entsprechende Kombination mehrerer dieser Zonen auf der Deckfolie 314 der Kapsel 104 kann eine einfache Codierung der Kapseln 104 vorgenommen werden.

Durch Verwendung mindestens einer Lichtquelle und einer der Anzahl der Reflexionsflächen entsprechenden Anzahl lichtempfindlicher Halbleiter in Form von Fotodioden oder Fototransistoren kann das von einer geeigneten Quelle an den Zonen der Deckfolie 314 reflektierte bzw. nicht reflektierte Licht erfasst und darüber die Kapsel 104 identifiziert werden.

Gemäß einer weiteren in den Figuren nicht gezeigten Ausführung der Sensoreinrichtung 108 ist diese geeignet, um eine Codierung der Kapsel 104 in Form einer Bedruckung mit bestimmten Zeichen oder Symbolen zu erfassen.

Figur 6 zeigt ein Ablaufdiagramm eines Ausführungsbeispiels eines Verfahrens 600 zum Betreiben eines Haushaltsgeräts. Das Verfahren 600 kann von der in den Figuren 1 und 2 gezeigten Vorrichtung zum Betreiben des in Figur 1 gezeigten Waschautomaten mit Kapselfach bei in das Kapselfach eingelegter Kapsel ausgeführt werden.

In einem Schritt des Erfassens 602 wird ein von einer Codierung der in das Kapselfach eingelegten Kapsel reflektiertes Licht in einer Sensoreinrichtung der Vorrichtung erfasst. In einem Schritt des Bereitstellens 604 stellt die Sensoreinrichtung eine auf dem reflektierten Licht basierende, die Codierung repräsentierende, Codierungsinformation an eine Auswahleinrichtung der Vorrichtung bereit. In einem Schritt des Auswählens 606 wählt die Auswahleinrichtung eine der Codierungsinformation zugeordnete Geräteeinstellung des Haushaltsgeräts aus einer Mehrzahl von Geräteeinstellungen aus.

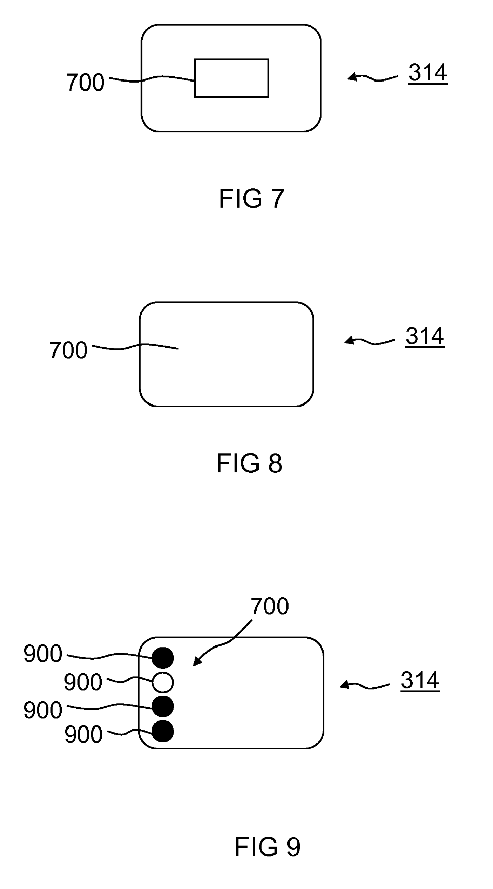

Figur 7 zeigt schematisch ein Ausführungsbeispiel der Deckfolie 314 für eine in einem Haushaltsgerät zu verwendende, mit einer Substanz gefüllte, Kapsel. Die beispielhafte Deckfolie 314 bildet eine Codierzone 314 der Kapsel und ist aus einem Kunststoffmaterial hergestellt und kann glänzend oder matt ausgeführt sein. Die Deckfolie 314 weist eine Codierung 700 auf, die hier in einer mittig auf die Oberfläche der Deckfolie 314 aufgebrachten Bedruckung 700 besteht. Die Codierung 700 ist geeignet, um von einer Sensoreinrichtung einer Vorrichtung zum Betreiben eines Haushaltsgeräts erfasst und zur Erstellung einer die Codierung 700 repräsentierenden Codierungsinformation verwendet zu werden. Es kann sich bei der in Figur 7 gezeigten Codierung 700 um eine Farbfläche oder eine Fläche mit auf die Deckfolie 314 aufgedruckten Zeichen und/oder Symbolen handeln.

Bei glänzender Ausführung der Deckfolie 314, welche eine zuverlässige Farbmessung erschweren kann, kann es sich bei der Codierung 700 gemäß einem Ausführungsbeispiel um einen nicht glänzenden Bereich handeln, der z. B. auf die Oberfläche der Deckfolie 314 aufgeklebt ist.

Figur 8 zeigt schematisch ein weiteres Ausführungsbeispiel der Deckfolie 314 für die im Haushaltsgerät zu verwendende Kapsel. Hier besteht die Codierung 700 in einer vorbestimmten Farbgebung der Deckfolie 314 bzw. der Oberseite der Deckfolie 314. Beispielsweise ist in Figur 8 die dem Betrachter zugewandte Oberseite der Deckfolie 314 durchgehend in rot oder blau gehalten. Die Farbcodierung 700 kann mit einem Farbsensor identifiziert werden.

Insbesondere bei Verwendung der in Figur 8 gezeigten Farbcodierung 700 kann es vorteilhaft sein, die gesamte Deckfolie 314 in matter Ausführung zu gestalten. Bei Auswahl der Farben verschiedener Deckfolien 314 ist es zusätzlich von Vorteil, wenn die Farborte der verwendeten Farben einen bezüglich der Unterscheidbarkeit optimalen Abstand im Farbraum aufweisen.

Figur 9 zeigt schematisch eine beispielhafte Ausführung der Deckfolie 314, die für eine Identifikation mittels des oben kurz erläuterten Reflexionsmessprinzips geeignet ist. Hierzu weist die Deckfolie 314 an der dem Betrachter zugewandten Oberseite eine Mehrzahl von klar abgegrenzten Bereichen auf der Oberseite als Codierzonen 900 auf. Bei dem in Figur 9 gezeigten Ausführungsbeispiel werden vier Codierzonen 900 verwendet, die in einem linken Randbereich der Deckfolie 314 untereinander angeordnet sind. Die Codierzonen 900 können Licht reflektierend und nicht Licht reflektierend ausgeprägt sein.

Durch die Gestaltung der Codierzonen bzw. Reflexionszonen 900 mit sehr hohem bzw. sehr niedrigem Reflexionsgrad und entsprechende Kombination mehrerer dieser Zonen 900 auf der Deckfolie 314 kann die Codierung 700 der Kapseln einfach vorgenommen werden. Die spezifische Codierung 700 der in Figur 9 gezeigten Deckfolie 314 ergibt sich aus einer bestimmten Kombination von Licht bzw. viel Licht reflektierenden und kein bzw. wenig Licht reflektierenden Codierzonen 900. Von oben nach unten betrachtet ergibt sich die in Figur 9 gezeigte beispielhafte Codierung 700 durch eine erste nicht reflektierende Codierzone 900, eine zweite reflektierende Codierzone 900, eine dritte nicht reflektierende Codierzone 900 und eine vierte nicht reflektierende Codierzone 900.

Durch Verwendung mindestens einer Lichtquelle und einer der Anzahl der Reflexionsflächen 900 entsprechenden Anzahl lichtempfindlicher Halbleiter in Form von Fotodioden oder Fototransistoren in der erfindungsgemäßen Sensoreinrichtung kann das von einer geeigneten Quelle an den Zonen 900 der Deckfolie 314 reflektierte bzw. nicht reflektierte Licht erfasst und darüber die der Deckfolie 314 zugeordnete Kapsel identifiziert werden. Bei den beispielhaft in Figur 9 gezeigten vier Zonen 900 können somit bis zu 15 Kapselsorten unterschieden bzw. das Fehlen der Kapsel erkannt werden.

Selbstverständlich kann die Codierung 700 der zu verwendenden Kapseln auch an einer anderen Seite der Kapsel 104 als der Deckfolie 314 angeordnet sein. Gemäß Ausführungsbeispielen können die Kapseln 104 auch anders als mit einer Deckfolie geschlossen sein.

In den Figuren wurde das hierin vorgestellte Konzept der optischen Kapselerkennung und automatischen Geräteeinstellung anhand der Kapselerkennung am Beispiel eines Waschautomaten erläutert. Eine Umsetzung dieses Ansatzes ist auch in anderen elektrischen Haushaltsgeräten, beispielsweise Getränkeautomaten, wie einem Kaffeebereiter, der als Kapselmaschine ausgeführt ist, denkbar. Die Kapseln enthalten dann als die zu verwendende Substanz beispielsweise Kaffeepulver oder einen anderen Stoff zur Getränkezubereitung.

## Patentansprüche

1. Vorrichtung (106) zum Betreiben eines Haushaltsgeräts (100) mit einem Kapselfach (102) zum Aufnehmen einer Kapsel (104) mit einer in dem Haushaltsgerät (100) zu verwendenden Substanz, wobei die Kapsel (104) eine Codierung (700) aufweist, und wobei die Vorrichtung (106) die folgenden Merkmale aufweist:
eine optische Sensoreinrichtung (108) zum Erfassen eines von der Codierung (700) der in das Kapselfach (102) eingelegten Kapsel (104) reflektierten Lichts (202) und zum Bereitstellen einer auf dem reflektierten Licht (202) basierenden, die Codierung (700) repräsentierenden, Codierungsinformation (204); und
eine Auswahleinrichtung (200) zum Auswählen einer der Codierungsinformation (204) zugeordneten Geräteeinstellung des Haushaltsgeräts (100) aus einer Mehrzahl von Geräteeinstellungen.

2. Vorrichtung (106) gemäß Anspruch 1, bei der die Sensoreinrichtung (108) mindestens eine Lichtquelle (400) und mindestens einen lichtempfindlichen Sensor (404) aufweist, wobei die Lichtquelle (400) ausgebildet ist, um Licht (316) zum Beleuchten der Codierung (700) abzustrahlen, und der lichtempfindliche Sensor (404) ausgebildet ist, um das von der Codierung (700) reflektierte Licht (202) zu detektieren.

3. Vorrichtung (106) gemäß Anspruch 2, bei der die Lichtquelle (400) ausgebildet ist, um Licht (316) einer vorbestimmten Wellenlänge abzustrahlen, und/oder der lichtempfindliche Sensor (404) ausgebildet ist, um reflektiertes Licht (202) einer vorbestimmten Wellenlänge zu detektieren.

4. Vorrichtung (106) gemäß Anspruch 3, bei der die Sensoreinrichtung (108) eine weitere Lichtquelle (500, 502) aufweist, die ausgebildet ist, um Licht (504, 506) einer weiteren vorbestimmten Wellenlänge abzustrahlen, wobei der lichtempfindliche Sensor (404) ausgebildet ist, um von der Codierung (700) reflektiertes Licht (202) der vorbestimmten Wellenlänge und von der Codierung (700) reflektiertes Licht (202) der weiteren vorbestimmten Wellenlänge zu detektieren.

5. Vorrichtung (106) gemäß Anspruch 2, bei der der lichtempfindliche Sensor (404) ausgebildet ist, um Licht (202) einer vorbestimmten Wellenlänge zu detektieren, wobei die Sensoreinrichtung (108) einen weiteren lichtempfindlichen Sensor (406, 408) aufweist, der ausgebildet ist, um von der Codierung (700) reflektiertes Licht (202) einer weiteren vorbestimmten Wellenlänge zu detektieren, wobei die Sensoreinrichtung (108) ausgebildet ist, um die Codierungsinformation (204) unter Verwendung des reflektierten Lichts (202) der vorbestimmten Wellenlänge und des reflektierten Lichts (202) der weiteren vorbestimmten Wellenlänge bereitzustellen.

6. Vorrichtung (106) gemäß Anspruch 2, bei der der lichtempfindliche Sensor (404) ausgebildet ist, um von einer Reflexionszone (900) der Codierung (700) reflektiertes Licht (202) zu detektieren, und mit einem weiteren lichtempfindlichen Sensor (406, 408), der ausgebildet ist, um von einer weiteren Reflexionszone (900) der Codierung (700) reflektiertes Licht (202) zu detektieren, wobei die Sensoreinrichtung (108) ausgebildet ist, um die Codierungsinformation (204) unter Verwendung des von der Reflexionszone (900) der Codierung (700) reflektierten Lichts (202) und des von der weiteren Reflexionszone (900) der Codierung (700) reflektierten Lichts (202) bereitzustellen.

7. Vorrichtung (106) gemäß einem der vorangegangenen Ansprüche, bei der die optische Sensoreinrichtung (108) ausgebildet ist, um von einer an einer Fläche des Kapselfachs (102) angeordneten oder anordenbaren Kalibriercodierung reflektiertes Licht (202) zu erfassen und eine auf dem von der Kalibriercodierung reflektierten Licht (202) basierende, die weitere Kalibriercodierung repräsentierende, Kalibrierinformation bereitzustellen, und mit einer Kalibriereinrichtung (208) zum Kalibrieren der optischen Sensoreinrichtung (108) unter Verwendung der Kalibrierinformation.

8. Vorrichtung (106) gemäß einem der vorangegangenen Ansprüche, mit einer Geräteeinstelleinrichtung (206) zum Einstellen der ausgewählten Geräteeinstellung.

9. Vorrichtung (106) gemäß einem der Ansprüche 2 bis 8, bei der die Lichtquelle (400) ausgebildet ist, um ansprechend auf ein ein Öffnen des Kapselfachs (102) repräsentierendes Öffnungssignal das Kapselfach (102) zu beleuchten.

10. Kapsel (104) für ein Haushaltsgerät (100), die mit einer in dem Haushaltsgerät (100) zu verwendenden Substanz gefüllt ist, wobei die Kapsel (104) eine Codierung (700) zum Zuordnen einer Geräteeinstellung des Haushaltsgeräts (100) zu der Kapsel (104) aufweist.

11. Kapsel (104) gemäß Anspruch 10, bei der die Codierung (700) durch eine vorbestimmte Farbgebung zumindest einer Codierzone (314; 900) der Kapsel (104) gebildet ist.

12. Kapsel (104) gemäß Anspruch 10 oder 11, bei der die Codierung (700) durch eine vorbestimmte Ausprägung zumindest einer Codierzone (314; 900) der Kapsel (104) als Licht (202) reflektierende oder nicht Licht (202) reflektierende Codierzone (314; 900) gebildet ist.

13. Haushaltsgerät (100), insbesondere Waschautomat oder Kaffeebereiter, mit folgenden Merkmalen:
einem Kapselfach (102) zum Aufnehmen einer Kapsel (104) mit einer in dem Haushaltsgerät (100) zu verwendenden Substanz, wobei die Kapsel (104) eine Codierung (700) aufweist; und
einer Vorrichtung (106) gemäß einem der vorangegangenen Ansprüche zum Betreiben des Haushaltsgeräts (100), wobei die Vorrichtung (106) eine optische Sensoreinrichtung (108) zum Erfassen eines von der Codierung (700) der in das Kapselfach (102) eingelegten Kapsel (104) reflektierten Lichts (202) und Bereitstellen einer auf dem reflektierten Licht (202) basierenden, die Codierung (700) repräsentierenden, Codierungsinformation (204) und eine Auswahleinrichtung (200) zum Auswählen einer der Codierungsinformation (204) zugeordneten Geräteeinstellung des Haushaltsgeräts (100) aus einer Mehrzahl von Geräteeinstellungen aufweist.

14. Haushaltsgerät (100) gemäß Anspruch 13, bei der das Kapselfach (102) eine Durchgangsöffnung (312) zum Durchlassen eines von einer Lichtquelle (400) der Sensoreinrichtung (108) zum Beleuchten der Codierung (700) abgestrahlten Lichts (316) und/oder des von der Codierung (700) reflektierten Lichts (202) aufweist.

15. Verfahren (600) zum Betreiben eines Haushaltsgeräts (100) mit einem Kapselfach (102) zum Aufnehmen einer Kapsel (104) mit einer in dem Haushaltsgerät (100) zu verwendenden Substanz, wobei die Kapsel (104) eine Codierung (700) aufweist, wobei das Verfahren (600) die folgenden Schritte umfasst:
Erfassen (602) eines von der Codierung (700) der in das Kapselfach (102) eingelegten Kapsel (104) reflektierten Lichts (202);
Bereitstellen (604) einer auf dem reflektierten Licht (202) basierenden, die Codierung (700) repräsentierenden, Codierungsinformation (204); und
Auswählen (606) einer der Codierungsinformation (204) zugeordneten Geräteeinstellung des Haushaltsgeräts (100) aus einer Mehrzahl von Geräteeinstellungen.
